# EUROPÄISCHE PATENTSCHRIFT

(11) **EP 4 172 032 B1**
(45) Veröffentlichungstag und Bekanntmachung des Hinweises auf die Patenterteilung: **25.02.2026**
(21) Anmeldenummer: 21749224.8
(22) Anmeldetag: 27.07.2021
(51) Int. Cl.: B62J 43/28, B62J 43/13, B62K 19/30

(54) **LAGERSYSTEM ZUR LAGERUNG EINER KOMPONENTE IN EINEM RAHMENROHR EINES FAHRRADRAHMENS**
SUPPORT SYSTEM FOR SUPPORTING A COMPONENT IN A FRAME TUBE OF A BICYCLE FRAME
SYSTÈME DE SUPPORT POUR SUPPORTER UN ÉLÉMENT DANS UN TUBE DE CADRE D'UN CADRE DE BICYCLETTE

(30) Priorität: 29.07.2020 DE 102020119979
(43) Veröffentlichungstag der Anmeldung: 03.05.2023
(73) Patentinhaber: Ridetronic GmbH, 80339 Muenchen (DE)
(72) Erfinder: JANOWSKI, Oliver Thomas, 81373 Muenchen (DE)
(74) Vertreter: Canzler & Bergmeier Patentanwälte Partnerschaft mbB
(86) Internationale Anmeldenummer: PCT/EP2021/071027
(87) Internationale Veröffentlichungsnummer: WO 2022/023356

(56) Entgegenhaltungen:
- EP-A1- 3 901 024
- DE-A1- 102013 204 557
- DE-U1- 202017 105 339
- JP-A- 2011 134 540

## Beschreibung

Die vorliegende Erfindung betrifft ein Lagersystem zur Lagerung von elektronischen Komponenten in einem Rahmenrohr eines Fahrradrahmens mit einem Grundkörper und zumindest einem ersten Abstützelement zum Lagern und/oder Befestigen des Grundkörpers an einer Innenseite des Rahmenrohrs. Des Weiteren betrifft die Erfindung einen Fahrradrahmen, mit einem Rahmenrohr und einem Lagersystem zur Lagerung von elektronischen Komponenten in dem Rahmenrohr, das einen Grundkörper und zumindest ein Abstützelement zum Lagern und/oder Befestigen des Grundkörpers an einer Innenseite des Rahmenrohrs aufweist.

Aus der DE 10 2013 204 557 A1, die alle Merkmale des Oberbegriffs des unabhängigen Anspruchs 1 offenbart, ist ein Fahrrad mit einem Elektromotor bekannt. Eine Batterie bzw. ein Akkumulator zum Betreiben zumindest des Elektromotors wird in einem Rahmenrohr eines Fahrradrahmens untergebracht. Das Dokument EP3901024, Stand der Technik gemäß Artikel 54(3) EPÜ, offenbart auch ein bekanntes Lagersystem zur Lagerung einer elektronischen Komponente.

Aufgabe der vorliegenden Erfindung ist es, ein Lagersystem für Komponenten für das Fahrrad zu schaffen, welches flexibel einsetzbar ist.

Die Aufgabe wird gelöst durch die Gegenstände der unabhängigen Patentansprüche.

Vorgeschlagen wird ein Lagersystem zur Lagerung von Komponenten in einem Rahmenrohr eines Fahrradrahmens. Der Fahrradrahmen ist für ein Fahrrad ausgebildet, insbesondere ein elektrisch angetriebenes Fahrrad, ein sogenanntes E-Fahrrad. Die Komponenten sind ferner elektronische Komponenten für das Fahrrad, wie beispielsweise ein Energiespeicher, beispielsweise für einen Elektromotor des E-Fahrrads, und/oder ein Steuergerät.

Das Lagersystem weist einen Gehäusekörper zur Aufnahme der Komponente auf. Der Gehäusekörper kann die, insbesondere elektronische, Komponente aufnehmen und vorzugsweise zumindest teilweise umhüllen. Das Lagersystem umfasst außerdem zumindest ein erstes Abstützelement zum Lagern des Gehäusekörpers an einer Innenseite des Rahmenrohrs. Zusätzlich oder alternativ kann mittels des zumindest einen ersten Abstützelements der Gehäusekörper auch an der Innenseite des Rahmenrohrs befestigt werden.

Erfindungsgemäß ist das erste Abstützelement an einer Außenseite des Gehäusekörpers befestigt. Zusätzlich oder alternativ kann das erste Abstützelement an der Außenseite des Gehäusekörpers befestigt werden. Dies ist vorteilhaft, da mittels dem ersten Abstützelement der Gehäusekörper gegenüber der Innenseiten des Rahmenrohrs abgestützt werden kann. Mit Hilfe des ersten Abstützelements kann der Gehäusekörper vom Rahmenrohr beabstandet gelagert werden. Die Komponente wird somit beispielsweise vor Vibrationen geschützt. Da das zumindest eine erste Abstützelement an der Außenseite des Gehäusekörpers angeordnet ist, ist es zwischen der Innenseite des Rahmenrohrs und dem Gehäusekörper angeordnet. Vorzugsweise kann so der Gehäusekörper von der Innenseite des Rahmenrohrs beabstandet werden, so dass Vibrationen nicht unmittelbar auf den Gehäusekörper gelangen.

Das erste Abstützelement ist erfindungsgemäß am Gehäusekörper lösbar befestigt werden.

Zusätzlich oder alternativ ist erfindungsgemäß das erste Abstützelement am Gehäusekörper lösbar befestigt. Abhängig von den mechanischen Anforderungen kann eine unterschiedliche Anzahl von Abstützelementen am Gehäusekörper angeordnet werden. Damit kann eine Lagerung erzielt werden, bei der die einwirkenden Kräfte optimal abgeleitet werden.

Von Vorteil ist es, wenn das Lagersystem zumindest ein zweites Abstützelement aufweist. Dieses unterscheidet sich vom ersten Abstützelement in seinen Abmessungen, insbesondere hinsichtlich Form, Größe und/oder Dimensionen. Dadurch kann der Gehäusekörper in nahezu beliebige Rahmenrohrdurchmesser und Rahmenrohrformen eines Fahrradrahmens eingepasst werden. Auch können Abweichungen in der Fertigungstoleranz damit ausgeglichen werden.

Ebenso bringt es Vorteile mit sich, wenn das erste und/oder das zweite Abstützelement im bestimmungsgemäßen Gebrauch des Lagersystems in einer Längsrichtung des Rahmenrohrs axial geführt und/oder verschiebbar ist. Infolgedessen kann das erste und/oder das zweite Abstützelement am Gehäusekörper positioniert werden, so dass der Gehäusekörper optimal gelagert ist. Das erste und/oder das zweite Abstützelement kann auch in einer Axialrichtung des Gehäusekörpers axial geführt und/oder verschiebbar sein.

Vorteilhaft ist es, wenn zumindest ein Abstützelement formschlüssig, stoffschlüssig und/oder kraftschlüssig mit dem Gehäusekörper verbunden ist und/oder verbunden werden kann. Die Abstützelemente können variabel am Gehäusekörper angeordnet werden. Insbesondere die form- und/oder kraftschlüssige Verbindung kann wieder gelöst werden, um das zumindest eine Abstützelement versetzen zu können.

Ebenso ist es vorteilhaft, wenn der Gehäusekörper an seiner Außenseite zumindest ein erstes Befestigungsmittel aufweist. Am ersten Befestigungsmittel kann das zumindest eine Abstützelement am Gehäusekörper angeordnet werden. Zusätzlich oder alternativ kann das zumindest eine Abstützelement ein mit dem ersten Befestigungsmittel korrespondierendes zweites Befestigungsmittel aufweisen. Dadurch kann bedarfsabhängig ein oder mehrere Abstützelemente an der Außenseite des Grundkörpers angebracht werden.

Des Weiteren ist es vorteilhaft, wenn sich das erste und/oder das zweite Befestigungsmittel im bestimmungsgemäßen Gebrauch des Lagersystems parallel zu einer Längsrichtung des Rahmenrohrs erstreckt. Das erste und/oder das zweite Befestigungsmittel können sich auch parallel zur Axialrichtung des Gehäusekörpers erstrecken. Im bestimmungsgemäßen Gebrauch sind die Längsrichtung und die Axialrichtung parallel zueinander orientiert, so dass das zumindest eine Abstützelement in Längsrichtung des Rahmenrohrs angeordnet werden kann.

Vorteilhaft ist es, wenn sich das erste Befestigungsmittel von einer ersten Stirnseite des Gehäusekörpers ausgehend und/oder das zweite Befestigungsmittel von einer ersten Stirnseite des Abstützelements ausgehend erstreckt, insbesondere bis zu einer gegenüberliegenden zweiten Stirnseite. Dabei kann sich das erste Befestigungsmittel und/oder das zweite Befestigungsmittel bis zur entsprechend gegenüberliegenden zweiten Stirnseite des Gehäusekörpers und/oder des Abstützelements erstrecken.

Auch ist es äußert vorteilhaft, wenn eines der beiden Befestigungsmittel als Nut und das andere Befestigungsmittel als, insbesondere formschlüssig in die Nut eingreifender, Fortsatz ausgebildet ist. Mittels der Nut und dem Fortsatz kann das zumindest eine Abstützelement auf einfache Weise verschoben werden.

Ebenso bringt es Vorteile mit sich, wenn die Nut zumindest eine Nutöffnung aufweist. Über diese Nutöffnung kann der Fortsatz in die Nut eingeführt und/oder aus dieser ausgeführt werden. Das ermöglicht eine schnelle Montage des zumindest einen Abstützelements und/oder einen schnellen Austausch.

Vorteilhaft ist es zudem, wenn der Gehäusekörper einen Aufnahmehohlraum für die elektronische Komponente aufweist, der zumindest eine Gehäusekörperöffnung umfasst. Innerhalb dieses Aufnahmehohlraums kann die Komponente angeordnet werden, wobei die Komponente durch die Gehäusekörperöffnung in den Aufnahmehohlraum eingeführt und/oder ausgeführt werden kann. Die besagten Komponenten können Bestandteile eines Controllers für den Elektromotor und/oder eine Steuereinheit für die Batterie bzw. des Akkumulators umfassen. Innerhalb des Aufnahmehohlraums werden die Komponenten vor mechanischer Krafteinwirkung geschützt.

Vorteile bringt es mit sich, wenn das Lagersystem eine erste und/oder zweite Abschlussplatte aufweist, die zum Verschließen der Gehäuseöffnung an einem der beiden Stirnseiten des Gehäusekörpers, insbesondere lösbar, befestigt ist. Die Abschlussplatten erhöhen die mechanische Stabilität des Gehäusekörpers und verschließen den Gehäusekörper bzw. den Aufnahmehohlraum. Darüber hinaus werden die Komponenten im Aufnahmehohlraum des Gehäusekörpers besser vor äußeren Einflüssen geschützt.

Vorteile bringt es mit sich, wenn die Nutöffnung an einem der beiden Stirnseiten des Gehäusekörpers angeordnet ist. Dadurch kann das zumindest eine Abstützelement von der entsprechenden Stirnseite her in die Nut eingeführt werden. Zusätzlich oder alternativ kann die Nutöffnung von einer der beiden Abschlussplatten verschlossen sein. Damit wird ein eventuelles Herausrutschen des zumindest einen Abstützelements aus der Nut verhindert. Darüber hinaus können die Abschlussplatten als definierter Endanschlag dienen.

Ferner ist erfindungsgemäß das erste Abstützelement radial aufweitbar, so dass der Gehäusekörper mit der Innenseite des Rahmenrohrs kraftschlüssig verspreizt werden kann. Vorteilhaft ist es zudem, wenn das zweite Abstützelement radial aufweitbar ist, so dass der Gehäusekörper mit der Innenseite des Rahmenrohrs kraftschlüssig verspreizt werden kann. Damit können Feinanpassungen bei der Montage durchgeführt werden. Außerdem kann somit der Gehäusekörper gegenüber dem Rahmenrohr fixiert werden. In der Folge verspreizt sich durch die Aufweitung des entsprechenden Abstützelements der Gehäusekörper an der Innenseite des Rahmenrohrs. Durch das Aufspreizen des entsprechenden Abstützelements kann eine kraftschlüssige Verbindung zwischen Gehäusekörper und Innenseite des Rahmenrohrs ausgebildet werden.

Von Vorteil ist es, wenn das erste und/oder zweite Abstützelement eine Bohrung, insbesondere mit zumindest einer Längsnut, aufweist, in die zum Aufspreizen des Abstützelements ein Spreizelement, insbesondere eine Schraube, Nagel oder Bolzen, einbringbar ist. Das Einbringen des Spreizelements kann, je nach Anwendungsfall, beidseitig erfolgen. Die Bohrung kann ferner ein Innengewinde aufweisen, in welches die Schraube als Spreizelement eingeschraubt werden kann. Das Spreizelement wird dadurch außerdem fixiert. Darüber kann ein Aufspreizen des Abstützelementes schnell und präzise erfolgen.

Des Weiteren ist es vorteilhaft, wenn der Gehäusekörper zumindest ein Anschlagelement aufweist, mittels dem der Gehäusekörper im bestimmungsgemäßen Gebrauch in Längsrichtung des Rahmenrohrs abstützbar und/oder lagerbar ist. Das Anschlagelement kann des Weiteren in der Länge, insbesondere über eine Gewindestange, verstellbar sein, so dass der Gehäusekörper mittels dem Anschlagelement positioniert werden kann, wenn das Anschlagelement am Rahmenrohr ansteht. Mittels des Anschlagelements kann der Gehäusekörper in Rahmenrohre unterschiedlicher Länge eingepasst werden.

Vorteilhaft ist es, wenn das Anschlagelement im Bereich einer der beiden Enden bzw. im Bereich einer der beiden Stirnseiten des Gehäusekörpers angeordnet ist. Außerdem kann das Anschlagelement auch an einer der beiden Abschlussplatten angeordnet sein. Mit Hilfe des Anschlagelements kann eine Länge des Gehäusekörpers mit dem Anschlagelement in Axialrichtung eingestellt werden. Dadurch wird eine leichte und präzise Montage der Komponenten des Lagersystems ermöglicht. Insbesondere kann mit Hilfe des Anschlagelements der Gehäusekörper in Längsrichtung des Rahmenrohrs positioniert werden.

Vorteilhaft ist es zudem, wenn das zumindest eine Anschlagelement axial, insbesondere in Längsrichtung des dafür vorgesehenen Rahmenrohrs, verstellbar ist. Zusätzlich oder alternativ kann das zumindest eine Anschlagelement auch in Axialrichtung des Gehäusekörpers verstellt werden. Durch eine Verstellung in Längsrichtung des Rahmenrohrs bzw. in Axialrichtung der Gehäusekörper kann der Gehäusekörper selbst gegenüber dem Rahmenrohr positioniert werden. Auch unter rauen Betriebsbedingungen wird eine exakte Positionierung der Gehäusekomponenten erreicht.

Vorteilhaft ist es, wenn der Gehäusekörper im Querschnitt zumindest eine Ecke aufweist. Zusätzlich oder alternativ kann das erste Befestigungsmittel in der Ecke ausgebildet sein. Da die Ecke ein äußerster Bereich des Gehäusekörpers ist, ist eine Positionierung des zumindest einen Abstützelements an der Ecke bzw. im Bereich der Ecke vorteilhaft. Dort weist das Abstützelement Kontakt zur Innenseite des Rahmenrohrs auf, wohingegen die Bereiche zwischen den Ecken von der Innenseite des Rahmenrohrs beabstandet sein können. Ferner kann sich bei Krafteinleitung an den Ecken des Gehäusekörpers die Kraft gleichmäßig über eine Außenfläche des Gehäusekörpers verteilen, wodurch Bereiche mit hohen Belastungsspitzen vermieden werden. Außerdem kann durch die Anordnung des ersten Befestigungsmittels in der Ecke auch das zumindest eine Abstützelement in der Ecke angeordnet werden. Das zumindest eine Abstützelement ist somit im Bereich am Gehäusekörper angeordnet, welcher am weitesten außen liegt, nämlich der Ecke.

Von Vorteil ist es, wenn das zumindest eine erste und/oder zweite Abstützelement elastisch ausgebildet ist. Dadurch können Vibrationen des Rahmenrohrs gedämpft werden. Die Vibrationen werden somit nur noch gedämpft oder nicht auf die Komponente übertragen, so dass diese weniger belastet werden. Beispielsweise kann das zumindest eine erste und/oder zweite Abstützelement aus einem Kunststoff und/oder Gummi ausgebildet sein und/oder ein Dämpfungselement, insbesondere aus Gummi, umfassen.

Vorgeschlagen wird des Weiteren ein Fahrradrahmen mit zumindest einem Rahmenrohr und einem Lagersystem zur Lagerung von elektronischen Komponenten im Rahmenrohr. Das Lagersystem umfasst einen Gehäusekörper und zumindest ein Abstützelement zum Lagern und/oder Befestigen des Gehäusekörpers an einer Innenseite des Rahmenrohrs.

Das Lagersystem ist dabei gemäß zumindest einem Merkmal der vorangegangenen und/oder nachfolgenden Beschreibung ausgebildet.

Vorteile bringt es mit sich, wenn das zumindest eine Abstützelement an einer Innenseite des Rahmenrohrs anliegt und in Radialrichtung des Rahmenrohrs zwischen dem Gehäusekörper und dem Rahmenrohr verspreizt ist. Dies ermöglicht eine mechanisch belastbare Fixierung des Gehäusekörpers im Rahmenrohr. Dabei liegt der Gehäusekörper nicht unmittelbar am Rahmenrohr an. Der Gehäusekörper kann vom Rahmenrohr, insbesondere von der Innenseite des Rahmenrohrs, beabstandet sein. Durch die Wahl des zumindest einen Abstützelements, beispielsweise dessen Größe, Form und/oder Durchmesser, kann der Gehäusekörper in jedem Rahmenrohr mittels dem Lagersystem gelagert werden.

Dabei kann der Gehäusekörper lediglich mittelbar über das zumindest eine Abstützelement an der Innenseite des Rahmenrohrs anliegen bzw. dieses kontaktieren, so dass sich das Rahmenrohr in gewissem Maße biegen und/oder verdrehen kann, ohne dass dabei der Gehäusekörper mit gebogen und/oder verdreht wird. Beschädigungen der Komponenten können dadurch verhindert werden. Das Rahmenrohr kann somit mit einer geringeren Festigkeit geplant werden, wodurch wiederum Gewicht eingespart werden kann. Vorgeschlagen wird außerdem ein Fahrradrahmen mit einem Rahmenrohr und einer unbeweglich im Rahmenrohr fixierten Elektronikeinheit. Die Elektronikeinheit ist beispielsweise ein Steuergerät. Im Rahmenrohr ist ferner eine Lagereinheit unbeweglich fixiert. Zwischen der Elektronikeinheit und der Lagereinheit ist ein Energiespeicher angeordnet. Der Energiespeicher ist an seinem ersten Ende über eine erste Schnittstelle mit der Elektronikeinheit verbunden. Der Energiespeicher ist des Weiteren an seinem zweiten Ende über eine zweite Schnittstelle mit der Lagereinheit lösbar verbunden. Der Energiespeicher kann beispielsweise einen Elektromotor eines Elektrofahrrads mit Energie versorgen. Ferner kann die Elektronikeinheit mit dem Energiespeicher verbunden sein, so dass die Elektronikeinheit von dem Energiespeicher Energie beziehen und/oder den Energiespeicher bzw. einen Energiefluss steuern kann. Der Energiespeicher ist beispielsweise eine Batterie oder ein Akkumulator.

Vorgeschlagen ist somit ein Fahrradrahmen, mit einem Rahmenrohr, einer unbeweglich im Rahmenrohr fixierten Elektronikeinheit, einer unbeweglich im Rahmenrohr fixierten Lagereinheit und einem zwischen der Elektronikeinheit und der Lagereinheit angeordneten Energiespeicher, der an seinem ersten Ende über eine erste Schnittstelle mit der Elektronikeinheit und an seinem zweiten Ende über eine zweite Schnittstelle mit der Lagereinheit lösbar verbundenen ist.

Die erste und die zweite Schnittstelle ist derart ausgebildet, dass der Energiespeicher schwimmend gelagert ist. Der Energiespeicher kann sich gegenüber der Elektronikeinheit und der Lagereinheit bewegen.

Somit sind die erste und zweite Schnittstelle derart ausgebildet, dass der Energiespeicher schwimmend gelagert ist und sich gegenüber der Elektronikeinheit und der Lagereinheit bewegen kann. Der Energiespeicher kann sich somit gegenüber dem Rahmenrohr bewegen, wenn sich dieser unter Belastung verformt und/oder verdreht. Derartige Belastungen werden somit nicht oder nur wenig auf den Energiespeicher übertragen. Beschädigungen des Energiespeichers werden somit verhindert bzw. dessen Haltbarkeit verlängert.

Die Elektronikeinheit umfasst eine elektronische Komponente, beispielsweise in Steuergerät für das Elektro-Fahrrad, und ein Lagersystem zum Lagern der elektronischen Komponente im Rahmenrohr. Das Lagersystem kann dabei gemäß einem oder mehreren Merkmalen der vorangegangenen und/oder nachfolgenden Beschreibung ausgebildet sein.

Vorteilhaft ist es, wenn die erste und die zweite Schnittstelle derart ausgebildet sind, dass der Energiespeicher im Bereich der ersten Schnittstelle um die Elektronikeinheit rotieren kann. Die Rotation erfolgt insbesondere um zumindest eine in Längsrichtung des Rahmenrohrs quer verlaufende erste Drehachse. Zusätzlich oder alternativ kann die Rotation zu einer zu dieser ersten Drehachse lotrechten zweiten Drehachse erfolgen. Die Rotationsmöglichkeiten gegebenen Freiheitsgrade ermöglichen Bewegungen des Energiespeichers. Dadurch können im bestimmungsgemäßen Gebrauch auftretende Kräfte ausgeglichen werden. Auch wird ein leichtes Entnehmen des Energiespeichers ermöglicht. Vorteilhaft ist es, wenn die erste und zweite Schnittstelle derart ausgebildet sind, dass der Energiespeicher im Bereich der ersten Schnittstelle um die Elektronikeinheit, insbesondere um zumindest eine zur Längsrichtung des Rahmenrohrs quer verlaufende erste Drehachse und/oder eine zu dieser ersten Drehachse lotrechte zweite Drehachse, rotieren kann.

Von Vorteil ist es, wenn die erste Schnittstelle ein zwischen dem Energiespeicher und der Elektronikeinheit ausgebildetes Gelenk aufweist. Dadurch kann sich der Energiespeicher gegenüber der Elektronikeinheit schwenken.

Von Vorteil ist es, wenn zwischen einer Stirnseite des Energiespeichers und einer dieser gegenüberliegenden Stirnseite der Elektronikeinheit ein Spalt ausgebildet ist. Es ist somit der Spalt in Längs- bzw. in Axialrichtung zwischen der Elektronikeinheit und dem Energiespeicher angeordnet. Durch die Beabstandung mittels des Spaltes kann eine rotatorische und/oder translatorische Bewegung des Energiespeichers zur Elektronikeinheit erfolgen. Zusätzlich oder alternativ kann durch den Spalt ein Abstand zwischen Elektronikeinheit und Energiespeicher vermindert werden, ohne dass beide aneinander anstoßen. Die Entnahme und das Wiedereinbringen des Energiespeichers wird durch den Spalt ebenfalls vereinfacht. Eine für den im Gebrauch und/oder für eine Montage bzw. Demontage notwendige Beweglichkeit wird durch den Spalt gewährleistet.

Von Vorteil ist es, wenn die erste Schnittstelle ein Distanzelement aufweist, das den Spalt überbrückt und/oder den Energiespeicher und die Elektronikeinheit beabstandet.

Vorteilhafterweise weist die erste Schnittstelle ein Distanzelement auf, das den Spalt überbrückt. Zusätzlich oder alternativ wird durch das Distanzelement der Energiespeicher und die Elektronikeinheit beabstandet. Mittels des Distanzelements kann verhindert werden, dass sich der Energiespeicher und die Elektronikeinheit berühren, natürlich bis auf das Distanzelement.

Von Vorteil ist es somit, wenn die erste Schnittstelle ein Distanzelement aufweist, das den Spalt überbrückt und/oder den Energiespeicher und die Elektronikeinheit beabstandet.

Von Vorteil ist es, wenn die erste Schnittstelle eine Vertiefung aufweist, in der ein freies Ende des Distanzelements, insbesondere zur Ausbildung des Gelenks drehbeweglich, aufgenommen ist.

Vorteilhaft ist es, wenn die erste Schnittstelle eine Vertiefung aufweist. Darin ist ein freies Ende des Distanzelements aufgenommen. Dadurch kann das Gelenk ausgebildet werden. Die Aufnahme erfolgt dreh- und/oder schwenkbeweglich, wodurch freie Rotationsgrade gegeben sind.

Von Vorteil ist es, wenn das freie Ende des Distanzelements eine konvexe erste Gelenkfläche und die Vertiefung eine mit dieser korrespondierende konkave zweite Gelenkfläche aufweist. Das freie Ende des Distanzelements korrespondiert mit der Vertiefung. Damit kann neben der, insbesondere rotatorischen, Beweglichkeit eine sichere Führung und die Aufnahme von entstehenden Kräften sichergestellt werden.

Von Vorteil ist es, wenn das Distanzelement und/oder die Vertiefung in Gehäusequerrichtung exzentrisch und/oder in einem Randbereich der Stirnseite angeordnet ist.

Vorteilhafterweise ist das Distanzelement und/oder die Vertiefung in Gehäusequerrichtung exzentrisch angeordnet. Zusätzlich oder alternativ ist das Distanzelement und/oder die Vertiefung in einem Randbereich der Stirnseite angeordnet. Durch diese Anordnung wird eine für den Gebrauch günstige Verkippung der Gehäusekörper ermöglicht. Dadurch wird die Entnahme des Energiespeichers aus dem Rahmenrohr vereinfacht.

Vorteilhaft ist es, wenn das Distanzelement oder die Vertiefung an der Elektronikeinheit oder an dem Energiespeicher ausgebildet ist. Die dadurch ausgebildete Gelenkverbindung ermöglicht eine relative Beweglichkeit der Gehäusekörper zueinander. Dadurch ist eine schwimmende Lagerung des Energiespeichers gegeben. Eine Entnahme und eine Montage des Energiespeichers wird vereinfacht.

Von Vorteil ist es, wenn die erste Schnittstelle an der Elektronikeinheit einen elektrischen ersten Stecker und am Energiespeicher einen mit dem ersten Stecker korrespondierenden elektrischen zweiten Stecker aufweist.

Vorteilhafterweise weist die erste Schnittstelle an der Elektronikeinheit einen elektrischen ersten Stecker auf. Die erste Schnittstelle weist am Energiespeicher einen mit dem ersten Stecker korrespondierenden elektrischen zweiten Stecker auf. Über den ersten Stecker und den zweiten Stecker erfolgt im bestimmungsgemäßen Gebrauch eine elektrische Kontaktierung.

Von Vorteil ist es, wenn der erste und/oder zweite Stecker gegenüber dem jeweils zugeordneten Gehäuse, insbesondere über ein elastisches Zwischenelement, beweglich gelagert ist.

Von Vorteil ist es, wenn der erste Stecker gegenüber dem jeweils zugeordneten Gehäuse, insbesondere über ein elastisches Zwischenelement, beweglich gelagert ist. Zusätzlich oder alternativ ist auch der zweite Stecker gegenüber dem jeweils zugeordneten Gehäuse, insbesondere mittels eines elastischen Zwischenelements, beweglich gelagert. Dadurch bleibt eine zuverlässige elektrische Kontaktierung, auch bei einer Relativbewegung der jeweiligen Gehäuse zueinander, gewährleistet.

Von Vorteil ist es, wenn sich das elastische Zwischenelement ringförmig um den Stecker erstreckt, in Radialrichtung zwischen dem radial inneren Stecker und dem radial äußeren Gehäuse angeordnet ist und/oder den Stecker mittelbar mit dem Gehäuse verbindet.

Vorteilhafterweise erstreckt sich das elastische Zwischenelement ringförmig um den Stecker. Zusätzlich oder alternativ ist das elastische Zwischenelement in Radialrichtung zwischen dem radial inneren Stecker und dem radial äußeren Gehäuse angeordnet. Zusätzlich oder alternativ verbindet das elastische Zwischenelement den Stecker mittelbar mit dem Gehäuse. Mit Hilfe des elastischen Zwischenelements sind die Stecker flexibel miteinander verbunden. Die Stecker können sich gegeneinander bewegen, wobei eine elektrische Verbindung bestehen bleibt. Vorzugsweise können beide Stecker ein besagtes elastisches Zwischenelement aufweisen.

Von Vorteil ist es, wenn die zweite Schnittstelle derart ausgebildet ist, dass das zweite Ende des Energiespeichers federbeaufschlagt in einer Neutralposition gehalten ist und/oder sich bei einer Erschütterung in Querrichtung des Rahmenrohrs aus der Neutralposition bewegen kann und anschließend wieder federbeaufschlagt in die Neutralposition bewegt wird.

Von Vorteil ist es, wenn die zweite Schnittstelle derart ausgebildet ist, dass das zweite Ende des Energiespeichers federbeaufschlagt in einer Neutralposition gehalten ist. Zusätzlich oder alternativ kann sich das zweite Ende des Energiespeichers bei einer Erschütterung in einer Querrichtung des Rahmenrohrs aus der Neutralposition herausbewegen und anschließend wieder federbeaufschlagt in die Neutralposition bewegen. Durch diese federnde Lagerung bleibt der Energiespeicher vor Stoßbelastungen geschützt. Außerdem wird das zweite Ende des Energiespeichers stets zurück in die Neutralposition bewegt. Die Neutralposition kann beispielsweise derart ausgebildet sein, dass der Energiespeicher koaxial zum Rahmenrohr angeordnet ist, wenn sich das zweite Ende des Energiespeichers in der Neutralposition befindet.

Von Vorteil ist es, wenn die zweite Schnittstelle ein elastisches Halteelement aufweist, mittels dem das zweite Ende des Energiespeichers, insbesondere in Querrichtung des Rahmenrohrs, federbeaufschlagt in der Neutralposition gehalten ist.

Vorteilhafterweise weist die zweite Schnittstelle ein elastisches Halteelement auf. Mittels dem elastischen Halteelement ist das zweite Ende des Energiespeichers, insbesondere in Querrichtung des Rahmenrohrs, federbeaufschlagt in der Neutralposition gehalten. Das elastische Halteelement kann schlaufenartig ausgebildet sein. Mittels des elastischen Halteelements kann eine Positionierung, genauso wie ein vordefinierter Bewegungsradius sichergestellt werden. Der Bewegungsradius kann dabei mittels einer Länge des Halteelements bestimmt werden.

Von Vorteil ist es, wenn die zweite Schnittstelle ein elastisches Dämpfungselement aufweist, über das das zweite Ende des Energiespeichers mittelbar mit dem Rahmenrohr verbunden ist.

Von Vorteil ist es, wenn die zweite Schnittstelle ein elastisches Dämpfungselement aufweist. Darüber ist das zweite Ende des Energiespeichers mittelbar mit dem Rahmenrohr verbunden. Somit wird eine Relativbewegung des Energiespeichers zum Rahmenrohr ermöglicht.

Von Vorteil ist es, wenn das elastische Dämpfungselement eine Auflagefläche umfasst, auf der der Energiespeicher im Bereich seines zweiten Endes in Querrichtung des Rahmenrohrs lose aufliegt.

Vorteilhaft ist es, wenn das elastische Dämpfungselement eine Auflagefläche umfasst. Auf dieser Auflagefläche liegt der Energiespeicher im Bereich seines zweiten Endes in Querrichtung des Rahmenrohrs lose auf. Durch diese Anordnung ist eine schwimmende Lagerung des Energiespeichers realisiert. Im ruhenden Zustand wird die Gewichtskraft des Energiespeichers, zumindest teilweise, durch das Dämpfungselement und die Auflagefläche aufgenommen. Stoßartige Belastungen werden von dem Dämpfungselement abgemindert.

Von Vorteil ist es, wenn das elastische Halteelement den Energiespeicher im Bereich seines zweiten Endes federbeaufschlagt in Querrichtung des Rahmenrohrs und/oder gegen die Auflagefläche des elastischen Dämpfungselements drückt.

Von Vorteil ist es, wenn das elastische Halteelement den Energiespeicher im Bereich seines zweiten Endes federbeaufschlagt in Querrichtung des Rahmenrohrs drückt. Zusätzlich oder alternativ drückt das elastische Haltelement den Energiespeicher im Bereich seines zweiten Endes federbeaufschlagt in Querrichtung des Rahmenrohrs gegen die Auflagefläche des elastischen Dämpfungselements. Dadurch ist insbesondere das zweite Ende des Energiespeichers fixiert und/oder gehalten. Dadurch ist der Energiespeicher in Neutralposition gehalten und gegen Stoßbelastungen, unabhängig aus welcher Richtung die Krafteinwirkung erfolgt, zuverlässig geschützt.

Vorteilhaft ist es, wenn das elastische Haltelement und das elastische Dämpfungselement einteilig ausgebildet sind. In dieser Ausführungsform ist sichergestellt, dass die Ausrichtung des Haltelements und des Dämpfungselements zueinander korrekt erfolgt. Darüber hinaus wird die Montage vereinfacht.

Von Vorteil ist es, wenn die zweite Schnittstelle ein Befestigungselement, insbesondere einen Haken, umfasst, an dem das elastische Halteelement, insbesondere eine Schlaufe des Halteelements, lose befestigt ist.

Von Vorteil ist es, dass die zweite Schnittstelle ein Befestigungselement, insbesondere einen Haken, umfasst. An diesem Befestigungselement kann das elastische Halteelement, insbesondere eine Schlaufe des Haltelements, lose befestigt werden. Dadurch kann der Energiespeicher leicht und schnell montiert werden und ist jederzeit mühelos wieder lösbar.

Von Vorteil ist es, wenn die zweite Schnittstelle zur Montageerleichterung und/oder zur Beweglichkeitsbeschränkung zumindest einen ersten und/oder zweiten Queranschlag und ein mit diesem korrespondierendes Anschlagelement umfasst.

Vorteilhaft ist es, wenn die zweite Schnittstelle zur Montageerleichterung zumindest einen ersten und/oder zweiten Queranschlag und ein mit diesem korrespondierendes, insbesondere rechteckiges, Anschlagelement umfasst. Durch diese Anordnung wird während der Montage eine Führung der Bauteile zueinander gewährleistet. Zusätzlich oder alternativ dient der erste und/oder der zweite Queranschlag und das korrespondierende Anschlagelement zur Bewegungsbeschränkung.

Vorteilhafterweise ist zwischen dem Anschlagelement und dem ersten und/oder zweiten Queranschlag ein Spiel ausgebildet. Durch den Queranschlag wird ein definiertes Bewegungsspiel des Queranschlages mit dem korrespondierenden Anschlagelement zugelassen. Durch das Spiel kann die schwimmende Lagerung ausgebildet werden.

Von Vorteil ist es, wenn das, insbesondere elastische, Halteelement, das, insbesondere elastische, Dämpfungselement, das Befestigungselement, der zumindest eine Queranschlag und/oder das Anschlagelement an dem Energiespeicher oder an der Lagereinheit ausgebildet ist. Je nach Ausführungsbeispiel kann die Anordnung der Elemente an den unterschiedlichen Lagereinheiten variieren. Abhängig von der technischen Realisierung kann eine optimale Interaktion der Elemente miteinander sichergestellt werden.

Von Vorteil ist es, wenn die Lagereinheit einen im Rahmenrohr fixierten Lagerkörper umfasst, der, insbesondere lose und/oder formschlüssig, mit dem Halteelement und/oder dem Dämpfungselement verbunden ist.

Vorteilhaft ist es, wenn die Lagereinheit einen im Rahmenrohr fixierten Lagerkörper umfasst, der, insbesondere lose und/oder formschlüssig, mit dem elastischen Halteelement und/oder Dämpfungselement verbunden ist. Das elastische Halteelement kann hierbei in Ausnehmungen und/oder Einkerbungen eingehackt sein. Vorteilhaft an dieser Ausführung ist eine einfach und mühelos wieder lösbare Befestigung des elastischen Halteelements am Lagerkörper. Der Energiespeicher ist an dem zweiten Ende durch die Anordnung mit einem dadurch gewährleisteten Bewegungsspiel, schwimmend gelagert.

Von Vorteil ist es, wenn der im Rahmenrohr fixierte Lagerkörper eine Gewindestange aufweist. Die Gewindestange weist ferner ein Gewinde auf. Mittels der Gewindestange kann der Lagerkörper an der Innenseite das Rahmenrohrs kraftschlüssig verspreizt werden. Die Gewindestange kann beispielsweise gegenüber dem Lagerkörper verdreht werden, so dass die Gewindestange heraus oder hinein gedreht werden kann. Mittels des Herausdrehens kann die Gewindestange im Rahmenrohr verspreizt werden. Darüber kann eine Längenverstellung der Gewindestange vorgenommen werden. Ein Arretierungselement umfasst die Gewindestange, mittels der die Lagereinheit im Rahmenrohr verspreizt werden kann.

Des Weiteren ist es von Vorteil, wenn an dem dem Arretierungselement zugewandten Ende der Gewindestange, ein Gewinde eingeschnitten ist. Auf dieses zweite Gewinde kann eine magnetische Arretiervorrichtung lösbar befestigt, insbesondere aufgeschraubt, werden. In die magnetische Arretiervorrichtung greift, im bestimmungsgemäßen Gebrauch, ein magnetischer Verriegelungsbolzen ein. Der magnetische Verriegelungsbolzen ist von einem Schließzylinder geführt. Die magnetische Wechselwirkung zwischen der magnetischen Arretiervorrichtung und dem magnetischen Verriegelungsbolzen dient einer haptischen Rückkopplung, sobald der magnetische Verriegelungsbolzen in die magnetische Arretiervorrichtung eingreift. Dadurch wird auch sichergestellt, dass der magnetischen Verriegelungsbolzen formschlüssig in die magnetische Arretiervorrichtung eingreift.

Von Vorteil ist es, wenn an einem Deckel ein Schließzylinder angeordnet ist, mittels dem der Deckel vor unerlaubtem Öffnen gesichert werden kann. Der Deckel verschließt dabei eine Öffnung, durch welche zumindest der Energiespeicher in das Rahmenrohr eingebracht oder entnommen werden kann. Der Schließzylinder kann sich an einem ersten Ende des Deckels befinden. Am zweiten Ende des Deckels, welches sich an der gegenüberliegenden Seite des ersten Endes befindet, weist dieser an seiner Unterseite einen ersten Magneten auf. Ein zweiter Magnet ist auf einem im Rahmenrohr fixierten Gehäusekörper angebracht. Die magnetische Vorrichtung dient einer lösbaren Fixierung des Deckels in einer Verriegelungsposition. An dem zweiten Ende des Deckels ist mindestens ein Fortsatzelement angebracht. Der oder die Fortsatzelemente greifen in die Innenseite des Rahmenrohrs ein. Dadurch kann mechanisch ein Ablösen des Deckels verhindert werden. In Interaktion mit dem Schließzylinder am ersten Ende des Deckels wird eine Fixierung des Deckels auf der Öffnung des Rahmenrohrs sichergestellt. Der Deckel verschließt die Öffnung des Rahmenrohrs vollständig. Damit wird ein Eindringen von Schmutzpartikeln und/oder Feuchtigkeit verhindert.

Vorgeschlagen wird ferner eine Elektronikeinheit, Lagereinheit und/oder ein Energiespeicher zur Verwendung in einem Fahrradrahmen, wobei der Fahrradrahmen gemäß zumindest einem Merkmal der vorangegangenen und/oder nachfolgenden Beschreibung ausgebildet ist.

Weitere Vorteile der Erfindung sind in den nachfolgenden Ausführungsbeispielen beschrieben. Es zeigen:
- **Figur 1**: eine perspektivische Ansicht eines Ausschnitts eines Fahrradrahmens mit einem Lagersystem,
- **Figur 2**: eine perspektivische Ansicht eines Gehäusekörpers,
- **Figur 3**: eine perspektivische Ansicht eines Abstützelements,
- **Figur 4**: eine Längs- und eine Frontansicht des Abstützelements,
- **Figur 5**: eine Frontansicht des in ein Rahmenrohr montierten Gehäusekörpers,
- **Figur 6**: eine Längsansicht des in ein Rahmenrohr montierten Gehäusekörpers,
- **Figur 7**: eine perspektivische Ansicht eines Energiespeichers,
- **Figur 8**: eine perspektivische Ansicht des Rahmenrohrs mit Gehäusekörper und Energiespeicher,
- **Figur 9**: eine perspektivische Ansicht einer Lagereinheit mit Energiespeicher und
- **Figur 10**: eine schematische Seitenansicht mit einem im Rahmenrohr gelagerten Energiespeicher.

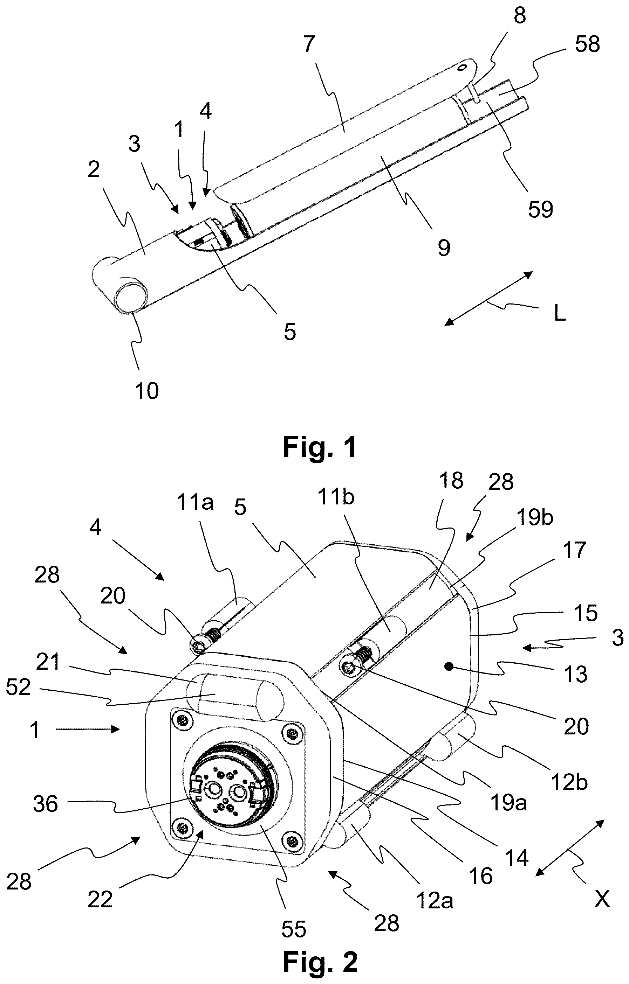

Figur 1 zeigt einen Ausschnitt bzw. einen Teil eines Fahrradrahmens mit einem Rahmenrohr 2. Als Rahmenrohr 2 ist hier beispielhaft ein Unterrohr mit einem Tretlagergehäuse 10 gezeigt. Alternativ kann das Rahmenrohr 2 auch ein Sattelrohr, Querrohr, Vorderrohr oder ein Rohr für einen Gepäckträger sein. Das Rahmenrohr 2 weist einen Rohrhohlraum 58 auf, in dem ein Lagersystem 4 zur Lagerung einer elektronischen Komponente angeordnet ist. Das Lagersystem 4 umfasst einen Gehäusekörper 5. Die Komponente ist beispielsweise ein Steuergerät für einen, ebenfalls in diesem Ausführungsbeispiel gezeigten, Energiespeicher 9. Der Energiespeicher 9 kann beispielsweise Energie für einen hier nicht gezeigten Elektromotor liefern, wenn der Fahrradrahmen Teil eines Elektrofahrrads ist. Der Energiespeicher 9 ist gemäß dem vorliegenden Ausführungsbeispiel ebenfalls im Rahmenrohr 2 aufgenommen bzw. im Rohrhohlraum 58 angeordnet. Die Komponente 1 ist ferner im Gehäusekörper 5 angeordnet. Dazu weist der Gehäusekörper 5 einen Aufnahmehohlraum 3 auf. Die, insbesondere elektronische, Komponente und/oder der Gehäusekörper 5 sowie das Lagersystem 4 bilden eine Elektronikeinheit 1.

Das Rahmenrohr 2 weist ferner eine Innenseite 59 auf.

Das Rahmenrohr 2 umfasst ferner einen Deckel 7, mittels dem der Rohrhohlraum 58 verschlossen werden kann. Der Deckel 7 kann außerdem mittels einer Arretiervorrichtung 8 verschlossen werden.

Außerdem ist eine Längsrichtung L gezeigt. Das Rahmenrohr 2 weist die Längsrichtung L auf bzw. erstreckt sich in Längsrichtung L, wobei, wie hier gezeigt ist, die Elektronikeinheit 1 und der Energiespeicher 9 in Längsrichtung L hintereinander angeordnet sind.

Merkmale, welche bereits in der zumindest einen vorgegangenen Figur beschrieben sind, werden der Einfachheit halber nicht nochmals erklärt. Ferner können Merkmale auch erst in zumindest einer der nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Figur 2 zeigt die Elektronikeinheit 1 mit dem Gehäusekörper 5. Das Lagersystem 4 umfasst zumindest ein erstes Abstützelement 11, welches an einer Außenseite 13 des Gehäusekörpers 5 befestigt ist. Zusätzlich oder alternativ kann das zumindest ein erstes Abstützelement 11 auch an der Außenseite 13 des Gehäusekörpers 5 befestigt werden. Der Gehäusekörper 5 weist, wie hier gezeigt ist, eine Axialrichtung X auf. Wenn die Elektronikeinheit 1 mit dem Gehäusekörper 5 im Rahmenrohr 2 angeordnet ist, sind die Längsrichtung L und die Axialrichtung X parallel zueinander.

Gemäß dem vorliegenden Ausführungsbeispiel sind hier mehrere erste Abstützelemente 11a, 11b gezeigt. Die Abstützelemente 11a, 11b sind, wie hier gezeigt ist, vorzugsweise im Bereich von Ecken 28 des Gehäusekörper 5 angeordnet. Der Gehäusekörper 5 weist hier einen quadratischen Querschnitt auf. Die Ecken 28 sind somit die am weitesten außenliegenden Bereiche, so dass Abstützelemente 11 dort den Gehäusekörper 5 im Rahmenrohr 2 abstützen können. Sind am Gehäusekörper 5 mehrere erste Abstützelemente 11 angeordnet, können diese in Axialrichtung X und/oder in einer Umfangsrichtung voneinander beabstandet sein. Die beiden hier gezeigten ersten Abstützelemente 11a, 11b sind in Umfangsrichtung voneinander beabstandet.

Im vorliegenden Ausführungsbeispiel umfasst das Lagersystem 4 noch zumindest ein zweites Abstützelement 12, das sich vom ersten Abstützelement 11, insbesondere hinsichtlich Form, Größe und/oder Dimensionen, unterscheidet. Auch hier sind am Gehäusekörper 5 mehrere zweite Abstützelemente 12a, 12b angeordnet. Sind am Gehäusekörper 5 mehrere zweite Abstützelemente 12 angeordnet, können diese in Axialrichtung X und/oder in einer Umfangsrichtung voneinander beabstandet sein. Die beiden hier gezeigten zweiten Abstützelemente 12a, 12b sind in Axialrichtung X voneinander beabstandet.

An einer ersten Stirnseite 14 des Gehäusekörpers 5 ist des Weiteren eine erste Abschlussplatte 16 angebracht, welche einen Aufnahmehohlraum 3 des Gehäusekörpers 5 verschließt. Der Aufnahmehohlraum 3 ist dabei im Inneren des Gehäusekörpers 5 angeordnet.

An einer zur ersten Stirnseite 14 gegenüberliegenden zweiten Stirnseite 15 des Gehäusekörpers 5, ist eine zweite Abschlussplatte 17 angeordnet, welche den Aufnahmehohlraum 3 des Gehäusekörpers 5 ebenfalls verschließt.

Die erste Abschlussplatte 16 umfasst ferner einen ersten Stecker 36, um die Elektronikeinheit 1 mit dem Energiespeicher 9 bzw. einem Gegenstück zu verbinden. Der erste Stecker 36 weist außerdem elektrische Kontakte 22 auf.

Außerdem weist die erste Abschlussplatte 16 ein Distanzelement 21 auf, welches in eine Vertiefung 33 des Energiespeichers 9 aufgenommen werden kann. Beide sind Teil einer ersten Schnittstelle, welche in folgenden Figuren näher beschrieben wird.

Das zumindest eine erste und/oder das zumindest eine zweite Abstützelement 11, 12 sind ferner in einer Nut 18 angeordnet. Die Nut 18 ist hier ein Ausführungsbeispiel eines ersten Befestigungsmittels zum Anordnen des zumindest einen Abstützelements 11, 12 am Gehäusekörper 5. Die Nut 18 weist ferner, wie hier gezeigt ist, zwei Nutöffnungen 19a, 19b auf, durch welche das erste und/oder das zweite Abstützelement 11, 12 in die Nut 18 eingeführt werden kann. Gemäß dem vorliegenden Ausführungsbeispiel sind die beiden Nutöffnungen 19a, 19b mittels den beiden Abschlussplatten 16, 17 verschlossen, so dass die entsprechenden Abstützelemente 11, 12 nicht mehr herausfallen können.

Das zumindest eine Abstützelemente 11, 12 kann des Weiteren entlang der Nut 18 verschoben werden und vorzugsweise kraft-, form- und/oder stoffschlüssig mit dem Gehäusekörper 5 verbunden werden. Das zumindest eine Abstützelemente 11, 12 ist somit, insbesondere lösbar, fixiert.

Das zumindest eine erste Abstützelement 11a, 11b weist ferner ein Spreizelement 20 auf, mittels dem das zumindest eine erste Abstützelement 11a, 11b aufgespreizt werden kann. Dadurch kann das zumindest eine erste Abstützelement 11a, 11b gegen die Innenseite 59 des Rahmenrohrs 2 eingespreizt werden, so dass die Elektronikeinheit 1 im Rahmenrohr 2 fixiert werden kann.

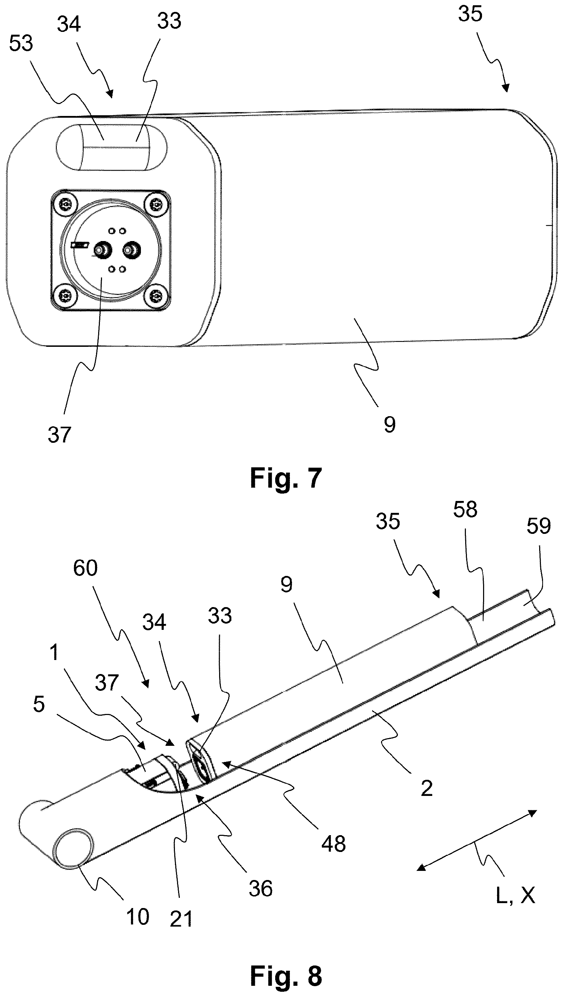

Der erste Stecker 36 weist ferner gemäß dem vorliegenden Ausführungsbeispiel ein elastisches Zwischenelement 55 auf. Das elastische Zwischenelement 55 erstreckt sich ringförmig um den ersten Stecker 36. Das elastische Zwischenelement 55 ist in einer Radialrichtung zwischen dem radial inneren ersten Stecker 36 und dem radial äußeren Gehäusekörper 5 angeordnet. Es verbindet den ersten Stecker 36 mittelbar mit dem Gehäusekörper 5. Durch diese Anordnung des elastischen Zwischenelements 55 erfährt die Steckverbindung einer ersten Schnittstelle 60 mit einem zweiten Stecker 37 eine rotatorische Beweglichkeit (vgl. Figur 7, 8 und 10). Die rotatorische Beweglichkeit erstreckt sich insbesondere zu einer in Längsrichtung L des Rahmenrohrs 2 bzw. zu einer in Axialrichtung X des Gehäusekörpers 5 quer verlaufenden ersten Drehachse und/oder einer zu dieser Drehachse lotrechten weiteren Drehachse.

Des Weiteren weist das Distanzelement 21 eine erste Gelenkfläche 52 auf, welche mit einer zweiten Gelenkfläche 53 einer Vertiefung 33 am Energiespeicher 9 ein Gelenk 48 ausbilden kann. Die zweite Gelenkfläche 53 der Vertiefung 33 am Energiespeicher 9 ist in Figur 7 gezeigt. Die erste Gelenkfläche 52 ist ferner gemäß dem vorliegenden Ausführungsbeispiel konvex ausgebildet.

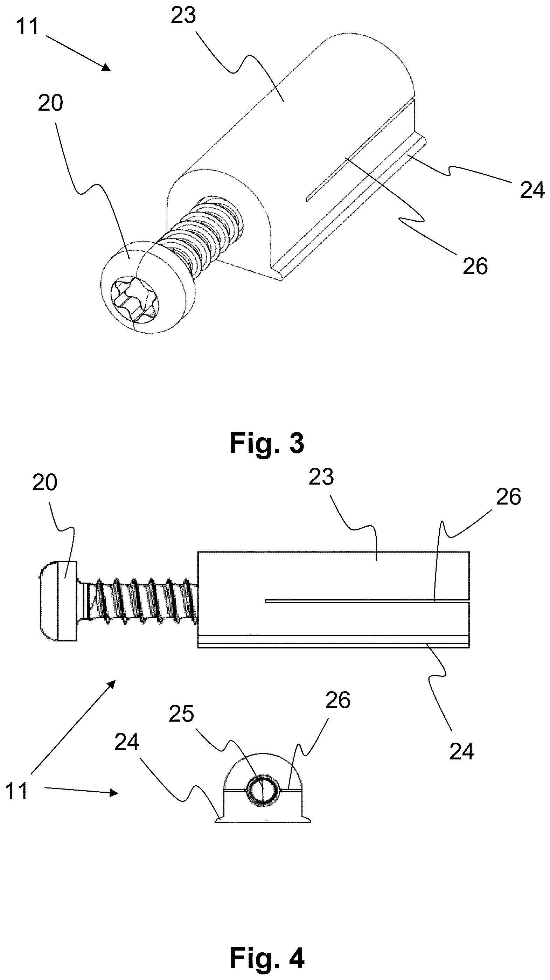

Figur 3 zeigt eine perspektivische Ansicht des ersten Abstützelements 11 mit einem Spreizelement 20 in einen Abstützkörper 23 des Abstützelements 11. Das Spreizelement 20 ist in diesem Ausführungsbeispiel als eine Schraube ausgebildet. Durch den im Abstützkörper 23 angeordneten Schlitz 26 kann sich der Abstützkörper 23 bei Einführung bzw. Eindrehen des Spreizelements 20 ausdehnen, wodurch der Querschnitt des Abstützkörpers 23 vergrößert wird. Dadurch kann das Abstützelement 11 bzw. der Abstützkörper 23 gegen die Innenseite 59 des Rahmenrohrs 2 gespreizt werden, so dass eine kraftschlüssige Verbindung ausgebildet wird.

Das Abstützelement 11 bzw. der Abstützkörper 23 weist einen Fortsatz 24 auf, welcher insbesondere formschlüssig, in die am Gehäusekörper 5 angebrachte Nut 18 eingreifen kann. Mittels des Fortsatzes 24 kann das zumindest eine Abstützelement 11 entlang der Nut 18 verschoben und positioniert werden. Zusätzlich oder alternativ kann auch das zumindest eine zweite Abstützelement 12 den Fortsatz 24 und/oder den Schlitz 26 zum Aufspreizen aufweisen. Der Fortsatz 24 ist ein Ausführungsbeispiel eines zweiten Befestigungsmittels zum Anordnen des zumindest einen Abstützelements 11, 12 am Gehäusekörper 5. Das erste und/oder das zweite Befestigungsmittel können auch als Schraubverbindung, Klippsverbindung und/oder Einrastverbindung ausgebildet sein, um das zumindest eine Abstützelements 11, 12 an der Außenseite 13 des Gehäusekörpers 5 anzuordnen.

Figur 4 zeigt sowohl eine Seitenansicht als auch eine Frontansicht des Abstützelements 11. Die Seitenansicht ist oben und die Frontansicht ist unten gezeigt.

In der Seitenansicht ist das Spreizelement 20 mit einer Schraube als Ausführungsbeispiel dargestellt. Die Länge des ersten Abstützelementes 11 bzw. gegebenenfalls des zweiten Abstützelements 12 kann genauso wie die Länge des Schlitzes 26 variieren.

Mittig ist eine Bohrung 25 angebracht, von der aus sich Schlitze 26 zur den Seiten hin erstrecken. Der Schlitz 26 erstreckt sich, wie hier gezeigt ist, über die vollständige Breite des Abstützkörpers 23 (siehe Frontansicht). Gemäß der Seitenansicht erstreckt sich der Schlitz 26 lediglich teilweise über die Länge des Abstützkörpers 23. Infolgedessen bleibt der Abstützkörper 23 einteilig.

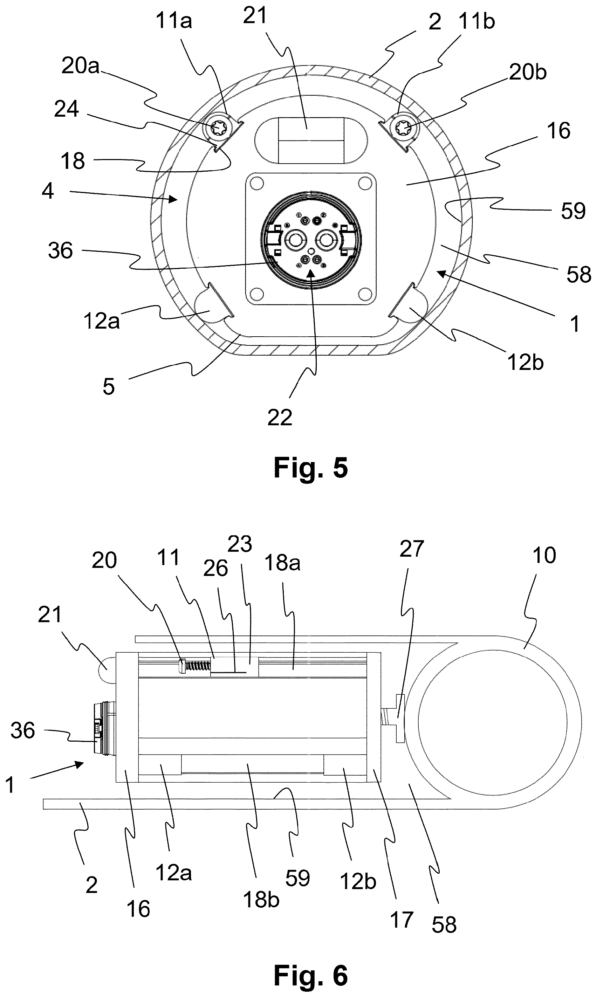

Figur 5 zeigt eine Frontansicht des Gehäusekörpers 5, mit Abstützelementen 11, 12, welche an der Innenseite 59 des Rahmenrohrs 2 anliegen. Gemäß dem vorliegenden Ausführungsbeispiel sind am Gehäusekörper 5 zwei erste Abstützelemente 11a, 11b und zwei zweite Abstützelemente 12a, 12b angeordnet. Die beiden ersten Abstützelemente 11a, 11b weisen jeweils die beiden Spreizelemente 20a, 20b zum Aufspreizen auf. Dadurch kann mittels des Lagersystems 4 bzw. den Abstützelementen 11, 12 der Gehäusekörper 5 gegen die Innenseite 59 des Rahmenrohrs 2 gespreizt werden, so dass der Gehäusekörper 5 mit der elektronischen Komponente im Rahmenrohr 2 fixiert ist. Wie gemäß dem vorliegenden Ausführungsbeispiel zu sehen ist, weisen lediglich die Abstützelemente 11, 12 Kontakt zum Rahmenrohr 2 auf. Der Gehäusekörper 5 ist vom Rahmenrohr 2 beabstandet. Verbiegungen und/oder Verwindungen des Rahmenrohrs 2 werden somit nicht auf den Gehäusekörper 5 übertragen, so dass dieser nicht belastet wird. Mittels dem zumindest einen Abstützelement 11, 12 können derartige Verformungen des Rahmenrohrs gedämpft werden insbesondere, wenn diese elastisch ausgebildet sind.

Die Erfindung ist nicht auf das hier dargestellte Ausführungsbeispiel beschränkt. Eine beliebige Kombination von Abstützelementen 11, 12 mit und ohne Spreizelement 20 kann vorgesehen sein.

Durch die Anordnung von ein oder mehreren Abstützelementen 11, 12 an dem Gehäusekörper 5 kann der Gehäusekörper 5 optimal in das Rahmenrohr 2, mit unterschiedlichen Rahmenrohrdurchmessern sowie Rahmenrohrformen, eingepasst werden. Um eine gute Verspreizung des Gehäusekörpers 5 gegen die Innenseite 59 des Rahmenrohrs 2 zu erreichen, können ein oder mehrere Abstützelemente 11, 12 am Gehäusekörper 5 angeordnet werden.

Figur 6 zeigt eine Seitenansicht des im Rahmenrohr 2 angeordneten Gehäusekörpers 5. Gezeigt ist hier der Gehäusekörper 5 benachbart zum Tretlagergehäuse 10 des als Unterrohr ausgebildeten Rahmenrohrs 2. Das Lagersystem 4 umfasst hier ein Anschlagelement 27, mittels dem der Gehäusekörper 5 in Längsrichtung L des Rahmenrohrs 2 abstützbar und/oder lagerbar ist. Dabei kann das Anschlagelement 27 lediglich am Rahmenrohr 2 anstoßen. Eine auf Zug belastbare Verbindung zwischen Anschlagelement 27 und Rahmenrohr 2 ist gemäß dem vorliegenden Ausführungsbeispiel nicht ausgebildet. Jedoch kann eine auf Zug belastbare Verbindung zwischen Anschlagelement 27 und Rahmenrohr 2 in einem alternativen Ausführungsbeispiel ausgebildet sein. Beispielsweise kann das Anschlagelement 27, insbesondere im Bereich des vom Gehäusekörper 5 abgewandten Endes, am Rahmenrohr 2 angeklebt, angeschraubt und/oder mittels einem Magnetelement verbunden sein. Zusätzlich oder alternativ kann der Gehäusekörper 5 mittels dem Verspreizen zumindest eines Abstützelements 11, 12 gegenüber dem Rahmenrohr 2 fixiert werden.

Das Anschlagelement 27 ist, wie hier gezeigt, an der zweiten Abschlussplatte 17 angeordnet und erstreckt sich vorzugsweise koaxial zum Gehäusekörper 5 von diesem weg. Das Anschlagelement 27 kann ferner in dessen Länge veränderbar sein, so dass eine Position des Gehäusekörpers 5 zum Rahmenrohr 2 eingestellt werden kann. Das Distanzelement 21 ist ferner auf der zum Anschlagelement 27 gegenüberliegenden Seite des Gehäusekörpers 5 angeordnet.

Figur 7 zeigt eine schematische Ansicht des Energiespeichers 9. Der Energiespeicher 9 weist an einem ersten Ende 34 einen zweiten Stecker 37 auf, welcher mit dem ersten Stecker 36 der Elektronikeinheit 1 zusammengefügt werden kann. Ferner weist der Energiespeicher 9 an seinem ersten Ende 34 die Vertiefung 33 auf, welche mit dem Distanzelement 21 der Elektronikeinheit 11 zusammengefügt werden kann. Der Energiespeicher 9 weist ein zweites Ende 35 auf, welches dem ersten Ende 34 gegenüberliegend ist.

Die Vertiefung 33 weist ferner die zweite Gelenkfläche 53 auf, welche mit der ersten Gelenkfläche 52 das Gelenk 48 bildet (vgl. Figur 8). Die zweite Gelenkfläche 53 ist hier konkav ausgebildet. Alternativ kann auch die erste Gelenkfläche 52 konkav und die zweite Gelenkfläche 53 konvex ausgebildet sein. Beide Gelenkflächen 52, 53 sollten miteinander korrespondieren, so dass diese eine gelenkige Verbindung ausbilden.

Figur 8 zeigt eine schematische Ansicht des im Rahmenrohr 2 angeordneten Gehäusekörpers 5. Der Gehäusekörper 5 bildet einen Teil der Elektronikeinheit 1. Die Elektronikeinheit 1 bzw. die erste Abschlussplatte 16 umfasst das Distanzelement 21 und den ersten Strecker 36 und der Energiespeicher 9 umfasst an dessen erster Seite 34 die Vertiefung 33 und den zweiten Stecker 37. Zumindest das Distanzelement 21 und die Vertiefung 33, in welche das Distanzelement 21 eingeführt werden kann, bilden eine erste Schnittstelle 60 zwischen der Elektronikeinheit 1 und dem Energiespeicher 9 aus. Die hier nicht mit einem Bezugszeichen versehene erste Gelenkfläche 52 des Distanzelements 21 und die ebenfalls nicht mit einem Bezugszeichen versehene zweite Gelenkfläche 53 der Vertiefung 33 bilden zusammen das Gelenk 48. Infolgedessen können sich Energiespeicher 9 und Elektronikeinheit 1 gegeneinander verschwenken bzw. rotieren.

Der Energiespeicher 9, an welchem sich am ersten Ende 34 die Vertiefung 33 und der zweite Stecker 37 befinden, kann mittels des ersten Steckers 36 elektrisch mit der Elektronikeinheit 1 verbunden werden. Das Distanzelement 21 stützt sich in der Vertiefung 33 ab, wodurch eine Beabstandung der Elektronikeinheit 1 zum Energiespeicher 9 ausgebildet wird.

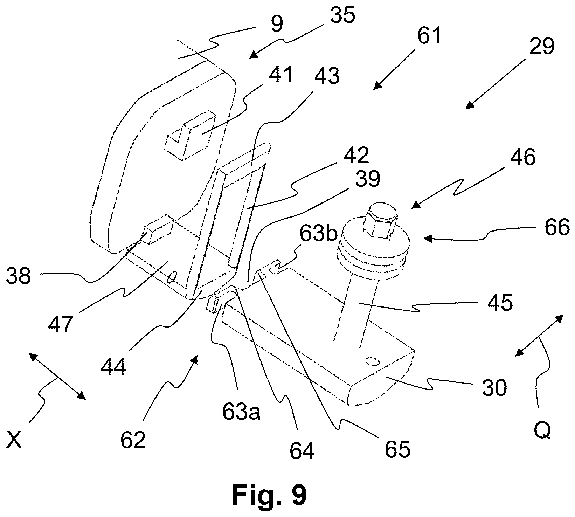

Figur 9 zeigt eine perspektivische Ansicht einer Lagereinheit 29 mit dem Energiespeicher 9. Der Energiespeicher 9 kann mittels der zweiten Schnittstelle 61 lösbar mit der Lagereinheit 29 verbunden werden.

Der Energiespeicher 9 weist ebenfalls die Axialrichtung X auf. Bei bestimmungsgemäßem Gebrauch sind die Axialrichtung X des Gehäusekörpers 5 und des Energiespeichers 9 zueinander parallel, so dass zur Erläuterung der Einfachheit halber die Axialrichtung X verwendet wird. Die Axialrichtung X ist ferner parallel zur Längsrichtung L des Rahmenrohrs 2.

Der Energiespeicher 9 weist in einem Randbereich ein Anschlagelement 38 auf. Das hier gezeigte Anschlagelement ist am zweiten Ende 35 des Energiespeichers 9 angeordnet. Die zweite Schnittstelle 61 umfasst das Anschlagelement 38. Mittels des Anschlagelements 38 kann der Energiespeicher 9 leichter in das Rahmenrohr 2 eingeführt bzw. im Rahmenrohr 2 montiert werden.

Die zweite Schnittstelle 61 umfasst ferner gemäß dem vorliegenden Ausführungsbeispiel ein Befestigungselement 41, welches hier als Haken ausgebildet ist. An dem Befestigungselement 41 kann ein elastisches Halteelement 42 der zweiten Schnittstelle 61 lose befestigt werden. Das elastische Halteelement 42 umfasst eine Schlaufe 43, welche, wie hier gezeigt ist, mit dem als Haken ausgebildetem Befestigungselement 41 verbunden, insbesondere eingehängt, werden kann. Dadurch kann die lösbare sowie elastische bzw. flexible Verbindung zwischen Energiespeicher 9 und Lagereinheit 29 ausgebildet werden, so dass der Energiespeicher 9 über die zweite Schnittstelle 61 schwimmend gelagert ist. Wie vorstehend bereits beschrieben ist, ist die erste Schnittstelle 60 ebenfalls flexibel, so dass auch hier die schwimmende Lagerung ausgebildet ist. Insgesamt ist somit der Energiespeicher 9 schwimmend gelagert.

Ferner umfasst die zweite Schnittstelle 61 ein elastisches Dämpfungselement 44, über das das zweite Ende 35 des Energiespeichers 9 mittelbar mit dem Rahmenrohr 2 verbunden ist. Das elastische Dämpfungselement 44 weist eine Auflagefläche 47 auf, auf der der Energiespeicher 9 im Bereich seines zweiten Endes 35 in Querrichtung des Rahmenrohrs 2 lose aufliegt.

Des Weiteren umfasst die Lagereinheit 29 einen Lagerkörper 30, welcher am Rahmenrohr 2 fixiert ist. Beispielsweise ist der Lagerkörper 30 am Rahmenrohr 2 angeschraubt, angenietet, angeklebt, angeschweißt und/oder festgeklemmt.

Der Lagerkörper 30 umfasst ferner eine Verbindungsanordnung 62, mittels der das elastische Dämpfungselement 44 und/oder das elastische Halteelement 42 mit dem Lagerkörper 30 verbunden werden kann. Beispielsweise weist die Verbindungsanordnung 62 zwei seitliche bzw. quer zur Axialrichtung X voneinander beabstandete Einkerbungen 63a, 63b auf, in welche das elastische Halteelement 42, insbesondere die Schlaufe 43, eingehängt werden kann. Die Einkerbungen 63a, 63b sind auch Ausnehmungen.

Ferner weist der Lagerkörper 30 eine Aussparung 39 auf, in welches das hier gezeigte Anschlagelement 38 eingeführt werden kann, wenn der Energiespeicher 9 mittels der zweiten Schnittstelle 61 mit der Lagereinheit 29 verbunden ist.

Außerdem umfasst die zweite Schnittstelle 61 einen ersten und/oder einen zweiten Queranschlag 64, 65, mittels dem das hier gezeigte Anschlagelement 38 seitlich, insbesondere in einer Querrichtung Q, geführt ist. Die Querrichtung Q ist quer zur Axialrichtung X orientiert.

Die Lagereinheit 29 weist weiterhin ein Arretierungselement 46 auf, mittels dem die Lagereinheit 29 gegen die Innenseite 59 des Rahmenrohrs 2 gespreizt werden kann. Das Arretierungselement 46 ist in der Länge verstellbar, so dass es, wenn es in das Rahmenrohr 2 eingeführt ist, verlängerbar ist, so dass es sich im Rahmenrohr 2 verspreizt.

Das Arretierungselement 46 umfasst eine Gewindestange 45, so dass das Arretierungselement 46 in der Länge verstellbar ist. Das Arretierungselement 46 kann beispielsweise im Lagerkörper 30 eingeschraubt sein und zur Verkürzung in den Lagerkörper 30 hinein oder zur Verlängerung aus dem Lagerkörper 30 herausgeschraubt werden.

Ferner ist gemäß dem vorliegenden Ausführungsbeispiel am Arretierungselement 46 ein Verriegelungselement 66 angeordnet, um den Deckel 7 zu verriegeln.

Zu beachten ist hier, dass die Elemente Energiespeicher 9, elastisches Dämpfungselement 44, Auflagefläche 47 und Lagerkörper 30 in Axialrichtung X auseinandergezogen bzw. voneinander beabstandet dargestellt sind. Wenn der Energiespeicher 9 mittels der zweiten Schnittstelle 61 mit der Lagereinheit 29 verbunden ist, ist die Auflagefläche 47 zumindest teilweise unter dem Energiespeicher 9, insbesondere im Bereich des zweiten Endes 35, angeordnet. Das hier gezeigte Anschlagelement 38 ist zumindest teilweise in der Aussparung 39 und/oder benachbart zu dem zumindest einen Queranschlag 64, 65 angeordnet. Weist die zweite Schnittstelle 61 bzw. der Lagerkörper 30 die beiden hier gezeigten Queranschläge 64, 65 auf, ist das hier gezeigte Anschlagelement 38 zwischen den beiden Queranschlägen 64, 65 angeordnet. Das elastische Halteelement 42 ist ferner in die beiden hier gezeigten Einkerbungen 63a, 63b der Verbindungsanordnung 62 eingehängt.

Im Rahmen dieser vorgegebenen Beweglichkeit ist mittels des elastischen Haltelements 42 der Energiespeicher 9 federnd gelagert. Durch das elastische Dämpfungselement 44 ist der Energiespeicher 9 mittelbar mit dem Rahmenrohr 2 verbunden. Der Energiespeicher 9 ist federbeaufschlagt in einer Neutralposition gehalten. Dadurch wird der Energiespeicher 9 erschütterungsfrei gelagert. Bei auftretenden Stößen, wird der Energiespeicher 9 ausgelenkt und federbeaufschlagt wieder in die Neutralposition zurückbewegt.

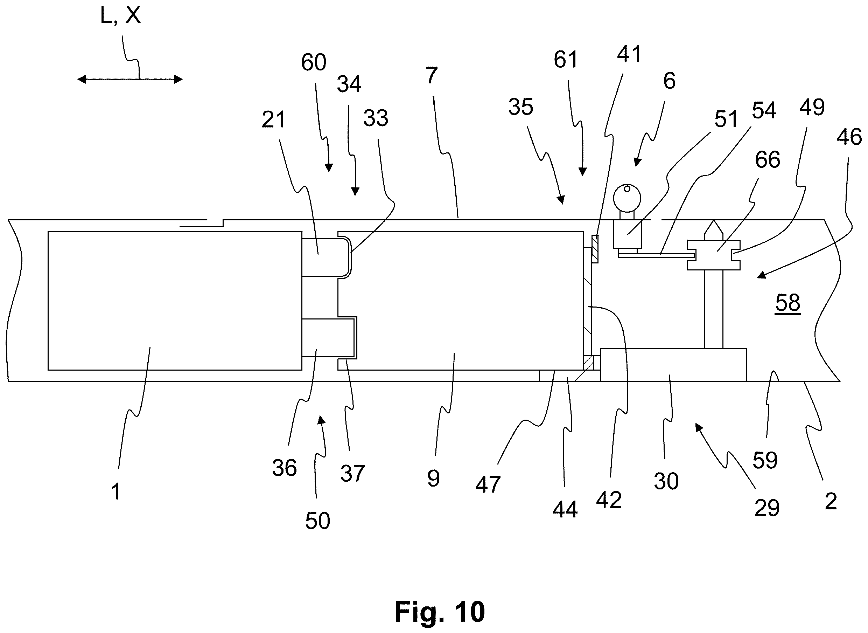

Figur 10 zeigt eine schematische Seitenansicht des im Rahmenrohr 2 gelagerten Energiespeichers 9. Der Energiespeicher 9 ist dabei im Vergleich zur Figur 9 der Übersichtlichkeit halber verkürzt dargestellt.

Der Energiespeicher 9 ist mittels der ersten Schnittstelle 60 mit der Elektronikeinheit 1 verbunden. Zwischen der Elektronikeinheit 1 und dem Energiespeicher 9 ist eine elektrische Verbindung mittels der beiden Stecker 36, 37 ausgebildet. Die erste Schnittstelle 60 umfasst ferner das Distanzelement 21 und die Vertiefung 33, wobei das Distanzelement 21 zumindest teilweise in die Vertiefung 33 eingreift. Einer der beiden Stecker 36, 37 ist mittels dem hier nicht gezeigten elastischen Zwischenelement 55 gegenüber der Elektronikeinheit 1 bzw. dem Energiespeicher 9 beweglich gelagert. Zwischen Elektronikeinheit 1 und dem Energiespeicher 9 ist ferner ein Spalt 50 angeordnet.

Mittels der hier gezeigten ersten Schnittstelle 60 und/oder dem Spalt 50 kann sich der Energiespeicher 9 gegenüber der Elektronikeinheit 1 verschwenken. Der Energiespeicher 9 kann gegenüber der Elektronikeinheit 1 seine Orientierung und/oder seinen Abstand verändern.

Auf der zur ersten Schnittstelle 60 gegenüberliegenden Seite bzw. am zweiten Ende des Energiespeichers 9, ist dieser mittels der zweiten Schnittstelle 61 mit der Lagereinheit 29 verbunden.

Der Energiespeicher 9 liegt im Bereich seines zweiten Endes 35 auf der Auflagefläche 47 des elastischen Dämpfungselements 44 auf. Mittels des elastischen Dämpfungselements 44 ist der Energiespeicher 9 an der Innenseite 59 des Rahmenrohrs 2 gedämpft gelagert.

Ferner ist das elastische Halteelement 42 mit einem als Haken ausgebildeten Befestigungselement verbunden bzw. eingehängt. Dadurch kann sich der Energiespeicher 9, wie in diesem Ausführungsbeispiel gezeigt ist, in Richtung des Deckels 7 und/oder vom elastischen Dämpfungselements 44 weg bewegen, wird jedoch wieder vom elastischen Halteelement 42 in die hier gezeigte Neutralposition zurückgezogen.

Der Energiespeicher 9 ist gemäß dem vorliegenden Ausführungsbeispiel von der Innenseite 59 des Rahmenrohrs 2 beabstandet angeordnet, so dass Vibrationen nicht übertragen werden. Der Energiespeicher 9 ist mittels der ersten und zweiten Schnittstelle 60, 61 schwimmend gelagert, so dass keine Vibrationen und/oder Verbiegungen des Rahmenrohrs 2 auf den Energiespeicher übertragen werden.

Des Weiteren ist das Arretierungselement 46 gezeigt, welches die Lagereinheit 29 unbeweglich im Rahmenrohr 2 fixiert.

Am Arretierungselement 46 ist, wie in diesem Ausführungsbeispiel gezeigt ist, das Verriegelungselement 66 angeordnet, mittels dem der Deckel 7 verschlossen werden kann. Am Deckel 7 ist dazu gemäß dem vorliegenden Ausführungsbeispiel eine Verriegelung 6 angeordnet, welche hier einen Schließzylinder 51 und ein Fortsatzelement 54 umfasst. Das Arretierungselement 46 weist eine, insbesondere vollständig umlaufende, Aussparung 49 auf, in welches das Fortsatzelement 54 zum Verriegeln des Deckels 7 eingreifen kann. Der Rohrhohlraum 58 ist somit verschlossen.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Elektronikeinheit
- 2: Rahmenrohr
- 3: Aufnahmehohlraum
- 4: Lagersystem
- 5: Gehäusekörper
- 6: Verriegelung
- 7: Deckel
- 8: Arretiervorrichtung
- 9: Energiespeicher
- 10: Tretlagergehäuse
- 11: erstes Abstützelement
- 12: zweites Abstützelement
- 13: Außenseite
- 14: erste Stirnseite des Gehäusekörpers
- 15: zweite Stirnseite des Gehäusekörpers
- 16: erste Abschlussplatte
- 17: zweite Abschlussplatte
- 18: Nut
- 19: Nutöffnung
- 20: Spreizelement
- 21: Distanzelement
- 22: elektrische Kontakte
- 23: Abstützkörper
- 24: Fortsatz
- 25: Bohrung
- 26: Schlitz
- 27: Anschlagelement
- 28: Ecke
- 29: Lagereinheit
- 30: Lagerkörper
- 33: Vertiefung
- 34: erstes Ende des Energiespeichers
- 35: zweites Ende des Energiespeichers
- 36: erster Stecker
- 37: zweiter Stecker
- 38: Anschlagelement
- 39: Aussparung
- 41: Befestigungselement
- 42: elastisches Halteelement
- 43: Schlaufe
- 44: elastisches Dämpfungselement
- 45: Gewindestange
- 46: Arretierungselement
- 47: Auflagefläche
- 48: Gelenk
- 49: Aussparung
- 50: Spalt
- 51: Schließzylinder
- 52: erste Gelenkfläche
- 53: zweite Gelenkfläche
- 54: Fortsatzelement
- 55: elastisches Zwischenelement
- 58: Rohrhohlraum
- 59: Innenseite
- 60: erste Schnittstelle
- 61: zweite Schnittstelle
- 62: Verbindungsanordnung
- 63: Einkerbung
- 64: erster Queranschlag
- 65: zweiter Queranschlag
- 66: Verriegelungselement
- L: Längsrichtung
- X: Axialrichtung
- Q: Querrichtung

## Patentansprüche

1. Lagersystem (4) zur Lagerung einer elektronischen Komponente in einem Rahmenrohr (2) eines Fahrradrahmens
mit einem Gehäusekörper (5) zur Aufnahme der Komponente und zumindest einem ersten Abstützelement (11) zum Lagern und/oder Befestigen des Gehäusekörpers (5) an einer Innenseite des Rahmenrohrs (2),
**dadurch gekennzeichnet,**
**dass** das erste Abstützelement (11) an einer Außenseite (13) des Gehäusekörpers (5) lösbar befestigt ist und/oder lösbar befestigt werden kann und
**dass** das erste Abstützelement (11) radial aufweitbar ist, so dass der Gehäusekörper (5) mit der Innenseite (59) des Rahmenrohrs (2) kraftschlüssig verspreizt werden kann.

2. Lagersystem nach dem vorherigen Anspruch, **dadurch gekennzeichnet, dass** das Lagersystem (4) zumindest ein zweites Abstützelement (12) aufweist, das sich von dem ersten Abstützelement (11), insbesondere hinsichtlich Form, Größe und/oder Dimensionen, unterscheidet.

3. Lagersystem nach einem oder mehreren der vorherigen Ansprüche, **dadurch gekennzeichnet, dass** das erste und/oder das zweite Abstützelement (11, 12) im bestimmungsgemäßen Gebrauch des Lagersystems (4) in einer Längsrichtung des Rahmenrohrs (2) axial geführt und/oder verschiebbar ist.

4. Lagersystem nach einem oder mehreren der vorherigen Ansprüche, **dadurch gekennzeichnet, dass** das zumindest eine Abstützelement (11, 12) formschlüssig, stoffschlüssig und/oder kraftschlüssig mit dem Gehäusekörper (5) verbunden ist und/oder verbunden werden kann.

5. Lagersystem nach einem oder mehreren der vorherigen Ansprüche, **dadurch gekennzeichnet, dass** der Gehäusekörper (5) an seiner Außenseite (13) zumindest ein erstes Befestigungsmittel (18, 24) und/oder
dass das zumindest eine Abstützelement (11, 12) ein mit dem ersten Befestigungsmittel (18, 24) korrespondierendes zweites Befestigungsmittel (18, 24) aufweist.

6. Lagersystem nach einem oder mehreren der vorherigen Ansprüche, **dadurch gekennzeichnet, dass** sich das erste und/oder zweite Befestigungsmittel (18, 24) im bestimmungsgemäßen Gebrauch des Lagersystems (4) parallel zu einer Längsachse des Rahmenrohrs (2) erstreckt, und/oder
dass sich das erste Befestigungsmittel (18, 24) von einer ersten Stirnseite des Gehäusekörpers (14) und/oder das zweite Befestigungsmittel (18, 24) von einer ersten Stirnseite des Abstützelements ausgehend erstreckt, insbesondere bis zu einer gegenüberliegenden zweiten Stirnseite.

7. Lagersystem nach einem oder mehreren der vorherigen Ansprüche, **dadurch gekennzeichnet, dass** eines der beiden Befestigungsmittel (18, 24) als Nut (18) und das andere Befestigungsmittel (18, 24) als, insbesondere formschlüssig in die Nut (18) eingreifender, Fortsatz (24) ausgebildet ist, wobei vorzugsweise die Nut (18) zumindest eine Nutöffnung (19) aufweist, über die der Fortsatz (24) in die Nut (18) eingeführt und/oder aus dieser ausgeführt werden kann.

8. Lagersystem nach einem oder mehreren der vorherigen Ansprüche, **dadurch gekennzeichnet, dass** der Gehäusekörper (5) einen Aufnahmehohlraum (3) für die elektronische Komponente aufweist, der zumindest eine Gehäuseöffnung zum Einführen der Komponente umfasst, und wobei das Lagersystem (4) vorzugsweise eine erste und/oder zweite Abschlussplatte (16, 17) aufweist, die zum Verschließen der Gehäuseöffnung an einem der beiden Stirnseiten (14, 15) des Gehäusekörpers (5), insbesondere lösbar, befestigt ist.

9. Lagersystem nach einem oder mehreren der vorherigen Ansprüche, **dadurch gekennzeichnet, dass** die Nutöffnung (19) an einem der beiden Stirnseiten (14, 15) des Gehäusekörpers (5) angeordnet und/oder von einer der beiden Abschlussplatten (16, 17) verschlossen ist.

10. Lagersystem nach einem oder mehreren der vorherigen Ansprüche, **dadurch gekennzeichnet, dass** das zweite Abstützelement (12) radial aufweitbar ist, so dass der Gehäusekörper (5) mit der Innenseite (59) des Rahmenrohrs (2) kraftschlüssig verspreizt werden kann.

11. Lagersystem nach einem oder mehreren der vorherigen Ansprüche, **dadurch gekennzeichnet, dass** das erste und/oder zweite Abstützelement (11, 12) eine Bohrung (25), insbesondere mit zumindest einer Längsnut, aufweist, in die zum Aufspreizen des Abstützelements (11, 12) ein Spreizelement (20), insbesondere eine Schraube, einbringbar ist.

12. Lagersystem nach einem oder mehreren der vorherigen Ansprüche, **dadurch gekennzeichnet, dass** der Gehäusekörper (5) zumindest ein Anschlagelement (27) aufweist, mittels dem der Gehäusekörper (5) im bestimmungsgemäßen Gebrauch in Längsrichtung (L) des Rahmenrohrs (2) abstützbar und/oder lagerbar ist, wobei dass das Anschlagelement (27) vorzugsweise im Bereich einer der beiden Stirnseiten (14, 15) des Gehäusekörpers (5), insbesondere an einer der Abschlussplatten (16, 17), angeordnet ist, und/oder dass das zumindest eine Anschlagelement (27) vorzugsweise axial, insbesondere in Längsrichtung (L) des dafür vorgesehenen Rahmenrohrs (2), verstellbar ist.

13. Fahrradrahmen,
mit einem Rahmenrohr (2) und
einem Lagersystem (4) zur Lagerung von elektronischen Komponenten in dem Rahmenrohr (2),
das einen Gehäusekörper (5) und
zumindest ein Abstützelement (11, 12) zum Lagern und/oder Befestigen des Gehäusekörpers (5) an einer Innenseite des Rahmenrohrs (2) aufweist,
**dadurch gekennzeichnet,**
**dass** das Lagersystem (4) gemäß einem oder mehreren der vorherigen Ansprüche ausgebildet ist.

14. Fahrradrahmen nach dem vorherigen Anspruch, **dadurch gekennzeichnet, dass** das Abstützelement (11, 12) an einer Innenseite (59) des Rahmenrohrs (2) anliegt und in Radialrichtung des Rahmenrohrs (2) zwischen dem Gehäusekörper (5) und dem Rahmenrohr (2) verspreizt ist.

## Claims

1. Bearing system (4) for bearing an electronic component in a frame tube (2) of a bicycle frame
having a housing body (5) for receiving the component and
at least one first support element (11) for bearing and/or fastening the housing body (5) on an inner side of the frame tube (2), **characterized in that**
the first support element (11) is releasably fastened and/or can be releasably fastened on an outer side (13) of the housing body (5) and the first support element (11) can be expanded radially, with the result that the housing body (5) can be spread in a force-fitting manner with the inner side (59) of the frame tube (2).

2. Bearing system according to the preceding claim, **characterized in that** the bearing system (4) has at least one second support element (12) which differs from the first support element (11), in particular with respect to shape, size and/or dimensions.

3. Bearing system according to one or more of the preceding claims, **characterized in that** the first and/or the second support element (11, 12) is/are axially guided and/or displaceable in a longitudinal direction of the frame tube (2) during intended use of the bearing system (4).

4. Bearing system according to one or more of the preceding claims, **characterized in that** the at least one support element (11, 12) is connected and/or can be connected to the housing body (5) in a form-fitting manner, in an integrally bonded manner and/or in a force-fitting manner.

5. Bearing system according to one or more of the preceding claims, **characterized in that** the housing body (5) has at least one first fastening means (18, 24) on its outer side (13) and/or the at least one support element (11, 12) has a second fastening means (18, 24) which corresponds to the first fastening means (18, 24).

6. Bearing system according to one or more of the preceding claims, **characterized in that** the first and/or second fastening means (18, 24) extends parallel to a longitudinal axis of the frame tube (2) during intended use of the bearing system (4), and/or the first fastening means (18, 24) extends from a first end side of the housing body (14) and/or the second fastening means (18, 24) extends from a first end side of the support element, in particular as far as an opposite second end side.

7. Bearing system according to one or more of the preceding claims, **characterized in that** one of the two fastening means (18, 24) is configured as a groove (18) and the other fastening means (18, 24) is configured as an extension (24) which engages in the groove (18), in particular in a form-fitting manner, wherein the groove (18) preferably has at least one groove opening (19) via which the extension (24) can be introduced into the groove (18) and/or can be guided out of the latter.

8. Bearing system according to one or more of the preceding claims, **characterized in that** the housing body (5) has a receiving cavity (3) for the electronic component, which receiving cavity comprises at least one housing opening for introducing the component, and wherein the bearing system (4) preferably has a first and/or second end plate (16, 17) which is fastened, in particular releasably, to one of the two end sides (14, 15) of the housing body (5) in order to close the housing opening.

9. Bearing system according to one or more of the preceding claims, **characterized in that** the groove opening (19) is arranged on one of the two end sides (14, 15) of the housing body (5) and/or is closed by one of the two end plates (16, 17).

10. Bearing system according to one or more of the preceding claims, **characterized in that** the second support element (12) can be expanded radially, with the result that the housing body (5) can be spread in a force-fitting manner with the inner side (59) of the frame tube (2).

11. Bearing system according to one or more of the preceding claims, **characterized in that** the first and/or second support element (11, 12) has a bore (25), in particular with at least one longitudinal groove, into which a spreading element (20), in particular a screw, can be introduced in order to spread the support element (11, 12).

12. Bearing system according to one or more of the preceding claims, **characterized in that** the housing body (5) has at least one stop element (27) by means of which the housing body (5) can be supported and/or mounted in the longitudinal direction (L) of the frame tube (2) during intended use, wherein the stop element (27) is preferably arranged in the region of one of the two end sides (14, 15) of the housing body (5), in particular on one of the end plates (16, 17), and/or the at least one stop element (27) is preferably adjustable axially, in particular in the longitudinal direction (L) of the frame tube (2) provided for this purpose.

13. Bicycle frame,
having a frame tube (2) and
a bearing system (4) for bearing electronic components in the frame tube (2),
which has a housing body (5) and
at least one support element (11, 12) for bearing and/or fastening the housing body (5) on an inner side of the frame tube (2),
**characterized in that**
the bearing system (4) is configured according to one or more of the preceding claims.

14. Bicycle frame according to the preceding claim, **characterized in that** the support element (11, 12) rests on an inner side (59) of the frame tube (2) and is spread in the radial direction of the frame tube (2) between the housing body (5) and the frame tube (2).

## Revendications

1. Système de palier (4) pour le montage d'un composant électronique dans un tube de cadre (2) d'un cadre de bicyclette
comprenant un corps de boîtier (5) pour la réception du composant et au moins un premier élément de support (11) pour monter et/ou fixer le corps de boîtier (5) sur un côté intérieur du tube de cadre (2),
**caractérisé en ce que**
le premier élément de support (11) est fixé de manière amovible sur un côté extérieur (13) du corps de boîtier (5) et/ou peut être fixé de manière amovible et
le premier élément de support (11) peut être élargi radialement de sorte que le corps de boîtier (5) peut être écarté par engagement par force avec le côté intérieur (59) du tube de cadre (2).

2. Système de palier selon la revendication précédente, **caractérisé en ce que** le système de palier (4) présente au moins un deuxième élément de support (12) qui se différencie du premier élément de support (11), en particulier en ce qui concerne la forme, la taille et/ou les dimensions.

3. Système de palier selon l'une quelconque ou plusieurs des revendications précédentes, **caractérisé en ce que** le premier et/ou le deuxième élément de support (11, 12) est guidé et/ou déplaçable axialement dans une direction longitudinale du tube de cadre (2) lors de l'usage prévu du système de palier (4).

4. Système de palier selon l'une quelconque ou plusieurs des revendications précédentes, **caractérisé en ce que** l'au moins un élément de support (11, 12) est relié et/ou peut être relié par engagement par correspondance de forme, par engagement par correspondance de matière et/ou par engagement par force avec le corps de boîtier (5).

5. Système de palier selon l'une quelconque ou plusieurs des revendications précédentes, **caractérisé en ce que** le corps de boîtier (5) présente sur son côté extérieur (13) au moins un premier moyen de fixation (18, 24) et/ou
l'au moins un élément de support (11, 12) présente un deuxième moyen de fixation (18, 24) correspondant au premier moyen de fixation (18, 24).

6. Système de palier selon l'une quelconque ou plusieurs des revendications précédentes, **caractérisé en ce que** le premier et/ou le deuxième moyen de fixation (18, 24) s'étend parallèlement à un axe longitudinal du tube de cadre (2) lors de l'usage prévu du système de palier (4), et/ou
le premier moyen de fixation (18, 24) s'étend à partir d'un premier côté frontal du corps de boîtier (14) et/ou le deuxième moyen de fixation (18, 24) s'étend à partir d'un premier côté frontal de l'élément de support, en particulier jusqu'à un deuxième côté frontal opposé.

7. Système de palier selon l'une quelconque ou plusieurs des revendications précédentes, **caractérisé en ce que** l'un des deux moyens de fixation (18, 24) est réalisé sous forme de rainure (18) et l'autre moyen de fixation (18, 24) est réalisé sous forme de prolongement (24) s'engageant en particulier par engagement par correspondance de forme dans la rainure (18), la rainure (18) présentant de préférence au moins une ouverture de rainure (19) par le biais de laquelle le prolongement (24) peut être introduit dans la rainure (18) et/ou peut être retiré de celle-ci.

8. Système de palier selon l'une quelconque ou plusieurs des revendications précédentes, **caractérisé en ce que** le corps de boîtier (5) présente une cavité de réception (3) pour le composant électronique, qui comprend au moins une ouverture de boîtier pour introduire le composant, et le système de palier (4) présentant de préférence une première et/ou une deuxième plaque de fermeture (16, 17) qui est fixée pour fermer l'ouverture de boîtier sur l'un des deux côtés frontaux (14, 15) du corps de boîtier (5), en particulier de manière amovible.

9. Système de palier selon l'une quelconque ou plusieurs des revendications précédentes, **caractérisé en ce que** l'ouverture de rainure (19) est disposée sur l'un des deux côtés frontaux (14, 15) du corps de boîtier (5) et/ou est fermée par l'une des deux plaques de fermeture (16, 17).

10. Système de palier selon l'une quelconque ou plusieurs des revendications précédentes, **caractérisé en ce que** le deuxième élément de support (12) peut être élargi radialement de sorte que le corps de boîtier (5) peut être écarté par engagement par force avec le côté intérieur (59) du tube de cadre (2).

11. Système de palier selon l'une quelconque ou plusieurs des revendications précédentes, **caractérisé en ce que** le premier et/ou le deuxième élément de support (11, 12) présente un alésage (25), en particulier avec au moins une rainure longitudinale, dans lequel un élément d'écartement (20), en particulier une vis, peut être introduit pour écarter l'élément de support (11, 12).

12. Système de palier selon l'une quelconque ou plusieurs des revendications précédentes, **caractérisé en ce que** le corps de boîtier (5) présente au moins un élément d'arrêt (27) au moyen duquel le corps de boîtier (5) peut être supporté et/ou monté dans la direction longitudinale (L) du tube de cadre (2) lors de l'usage prévu, l'élément d'arrêt (27) étant disposé de préférence dans la région de l'un des deux côtés frontaux (14, 15) du corps de boîtier (5), en particulier sur l'une des plaques de fermeture (16, 17), et/ou l'au moins un élément d'arrêt (27) pouvant être déplacé de préférence axialement, en particulier dans la direction longitudinale (L) du tube de cadre (2) prévu à cet effet.

13. Cadre de bicyclette,
comprenant un tube de cadre (2) et
un système de palier (4) pour le montage de composants électroniques dans le tube de cadre (2),
qui présente un corps de boîtier (5) et
au moins un élément de support (11, 12) pour monter et/ou fixer le corps de boîtier (5) sur un côté intérieur du tube de cadre (2),
**caractérisé en ce que**
le système de palier (4) est réalisé selon l'une quelconque ou plusieurs des revendications précédentes.

14. Cadre de bicyclette selon la revendication précédente, **caractérisé en ce que** l'élément de support (11, 12) s'applique contre un côté intérieur (59) du tube de cadre (2) et est écarté dans la direction radiale du tube de cadre (2) entre le corps de boîtier (5) et le tube de cadre (2).
